# EUROPÄISCHE PATENTSCHRIFT

(11) **EP 3 632 048 B1**
(45) Veröffentlichungstag und Bekanntmachung des Hinweises auf die Patenterteilung: **23.06.2021**
(21) Anmeldenummer: 18724778.8
(22) Anmeldetag: 07.05.2018
(51) Int. Cl.: H04L 12/28, H04L 1/08, H04L 1/00, H04L 5/00, H04W 80/00

(54) **VERFAHREN ZUR ÜBERTRAGUNG EINER INFORMATION**
METHOD FOR TRANSMITTING INFORMATION
PROCÉDÉ DE TRANSMISSION D'INFORMATIONS

(30) Priorität: 30.05.2017 DE 102017005131
(43) Veröffentlichungstag der Anmeldung: 08.04.2020
(73) Patentinhaber: Diehl Metering Systems GmbH, 90451 Nürnberg (DE)
(72) Erfinder: PETKOV, Hristo, 90425 Nürnberg (DE); KAUPPERT, Thomas, 90455 Nürnberg (DE)
(74) Vertreter: Diehl Patentabteilung
(86) Internationale Anmeldenummer: PCT/EP2018/000243
(87) Internationale Veröffentlichungsnummer: WO 2018/219488

(56) Entgegenhaltungen:
- WO-A1-2012/065758
- WO-A1-2015/074666
- WO-A1-2015/155316
- US-A1- 2008 080 555
- US-A1- 2014 369 329

## Beschreibung

Die vorliegende Erfindung betrifft ein Verfahren zur Übertragung einer Information gemäß dem Oberbegriff des Anspruchs 1, welches beispielweise dazu genutzt werden kann, Verbrauchs- und/oder Nutzdaten von Verbrauchsmessgeräten an einen übergeordneten Datensammler zu übertragen.

### Technologischer Hintergrund

Intelligente Verbrauchsmessgeräte, auch Smart Meter genannt, sind in einem Versorgungsnetz befindliche Verbrauchsmessgeräte, z. B. für Energie, Strom, Gas, Wasser, die dem jeweiligen Anschlussbenutzer den tatsächlichen Verbrauch anzeigen und in ein Kommunikationsnetz eingebunden sind. Intelligente Verbrauchsmessgeräte haben den Vorteil, dass manuelle Ablesungen der Zählerstände entfallen und seitens des Versorgers kurzfristigere Rechnungstellungen gemäß dem tatsächlichen Verbrauch vorgenommen werden können. Durch kurzfristigere Ableseintervalle ist wiederum eine genauere Kopplung der Endkundentarife an die Entwicklung der Börsenstrompreise möglich. Auch können Versorgungsnetze wesentlich besser ausgelastet werden.

Intelligente Verbrauchsmessgeräte sind üblicherweise jeweils Wohn-, Industrie- oder Gewerbeeinheiten zugeordnet. Die dort anfallenden Messdaten können auf unterschiedlichste Weise ausgelesen werden. Messdaten können z. B. über das Stromnetz (Power Line) ausgelesen werden. Die Einbindung der Verbrauchsmessgeräte in ein überörtliches Netzwerk ist hierbei allerdings nicht möglich. Ferner können Messdaten per Funktechnologie in Form von Datenpaketen oder aus mehreren Datenpaketen bestehenden Nachrichten übertragen werden.

Die Datenübertragung per Funk erfolgt beispielsweise im SRD (Short Range Devices)- oder ISM (Industrial, Scientific, Medical)-Frequenzbereich, z. B. 850 MHz - 950 MHz, an übergeordnete Datensammler, wie z. B. Konzentratoren, ein Netzwerkknotenpunkt oder die Schaltzentrale des Versorgers. Die SRD- oder ISM-Frequenzbereiche haben den Vorteil, dass diese lizenzfrei sind und für die Nutzung lediglich eine allgemeine Zulassung der Frequenzverwaltung notwendig ist. Allerdings besteht das Problem, dass aufgrund der Häufigkeit der Verwendung derartiger Frequenzbereiche für unterschiedlichste technische Einrichtungen, wie etwa Garagentorsteuerungen, Babyphones, Alarmanlagen, WLAN, Bluetooth, Rauchwarnmelder oder dergleichen, es häufig zu Störungen kommen kann.

Die Datenpakete werden in der Regel zur Funkübertragung gemäß einem Kommunikationsprotokoll codiert. Das Kommunikationsprotokoll umfasst hierbei z. B. den Frequenzbereich, den Kommunikationskanal, die Signalstärke oder dergleichen. Beispielsweise kann als Kommunikationsprotokoll das Kommunikationsprotokoll des M-Bus ("Meter-Bus") verwendet werden. Der M-Bus entspricht einem Standard bzw. einer technischen Norm (EN 13575), welche die Art und Weise der Verbrauchsdatenübertragung von Verbrauchsmessern innerhalb eines Kommunikationssystems festlegt.

### Druckschriftlicher Stand der Technik

Ein Verfahren zur Übertragung von Informationen von Verbrauchsmessgeräten gemäß dem Oberbegriff des Anspruchs 1 ist aus der WO 2015/074666 bekannt. Bei dem Verfahren können Datenpakete durch unterschiedliche Empfänger empfangen werden. Die Datenpakete sind hierbei in einen ersten Teil und einen zweiten Teil aufgeteilt. Der erste Teil ist vorzugsweise gemäß dem M-Bus Protokoll codiert und umfasst die Verbrauchsdaten der Verbrauchsmessgeräte. Der zweite Teil umfasst eine Fehlerkorrekturinformation, die dazu dient, eine Fehlerkorrektur des ersten Teils durchzuführen. Der erste Teil kann in einem ersten Kommunikationsreichweitenbereich unabhängig vom zweiten Teil übertragen werden. Das gesamte Datenpaket, bestehend aus ersten und zweiten Teil, kann innerhalb eines zweiten größeren Kommunikationsreichweitenbereichs übertragen werden, wobei eine nachfolgende Fehlerkorrektur anhand der Fehlerkorrekturinformation im zweiten Teil erfolgt. Dadurch, dass die Fehlerkorrekturinformation nur im zweiten Kommunikationsreichweitenbereich über einen entsprechend konfigurierten Empfänger empfangen wird, kann keine Fehlerkorrektur erfolgen, wenn im ersten Kommunikationsreichweitenbereich übertragen wird. Gerade in diesem nahen Übertragungsbereich über Frequenzen von 850 MHz - 950 MHz kann es häufig zu Störungen kommen. Dementsprechend hoch ist die Störanfälligkeit der Datenübertragung. Dadurch wird die Wahrscheinlichkeit einer erfolgreichen Übertragung eines Datenpaketes verringert. Infolgedessen muss das Datenpaket häufiger gesendet werden, bis es erfolgreich übertragen worden ist, wodurch ein hoher Energiebedarf die Folge ist.

Die US 2008/080555 A1 offenbart ein Verfahren zur Übertragung einer Vielzahl von Daten-Frames eines ersten Formats mit vorbestimmten Zeitspannen zwischen den Übertragungen der Daten-Frames. Ferner wird die Übertragung von Daten-Frames eines zweiten Formats offenbart, die in der Zeitspanne zwischen den Übertragungen der Daten-Frames im ersten Format übertragen werden.

In der WO 2012/065758 A1 wird ein System zur fehlersicheren und redundanten Übertragung von komplexen Daten zwischen einer stationären, zentralen Kontrolleinheit und einer Komponente zur Sicherheitssteuerung einer beweglichen Transporteinheit über ein drahtloses Kommunikationssystem beschrieben. Für die parallele Übertragung der Daten zwischen der zentralen Kontrolleinheit und zwei Übertragungsmodulen werden zwei getrennte Übertragungskanäle des Kommunikationssystems genutzt, wobei jeweils einer der zwei getrennten Übertragungskanäle einem der zwei Übertragungsmodule zugeordnet ist. Eine Ankopplung der zwei Übertragungsmodule an die Komponente zur Sicherheitssteuerung der Transporteinheit wird über jeweils ein Koppelmodul durchgeführt. Durch den Einsatz von zwei getrennten Übertragungskanälen sowie von Koppelmodulen wird eine physikalische Trennung von Kommunikationselementen in der Transporteinheit geschaffen.

Die WO 2015/155316 A1 offenbart ein Verfahren zum Betreiben eines Übertragungssystems, das ein erstes Netzwerk und ein zweites Netzwerk aufweist, wobei zum Austausch von Daten zwischen den zwei Netzwerken, Daten des ersten Netzwerkes über zwei Übertragungsstrecken drahtlos übertragen und an das angeschlossene zweite Netzwerk weitergeleitet werden, die Daten als Datenpakete über die erste Übertragungsstrecke übertragen werden und dann, wenn ein Datenpaket nicht übertragen wurde, dieses Datenpaket noch einmal über die zweite Übertragungsstrecke übertragen wird.

In der US 2014/369329 A1 wird eine Femtozelle offenbart, die einen Datenstrom aus Paketen für ein mobiles Gerät von einem drahtlosen Router empfängt und einen Übertragungsmodus zum Senden von Paketen des Datenstromes an das mobile Gerät auswählt. Der erste Übertragungsmodus umfasst die Übertragung der Datenpakete eine Long Term Evolution (LTE)-Schnittstelle der Femtozelle, der zweite Übertragungsmodus umfasst die Übertragung der Datenpakete über eine WiFi-Schnittstelle des drahtlosen Routers, und der dritte Übertragungsmodus umfasst die Übertragung eines ersten Teils der Datenpakete an das mobile Gerät über die LTE-Schnittstelle und die Weiterleitung eines zweiten Teils der Datenpakete an den drahtlosen Router zur Übertragung an das mobile Gerät über die WiFi-Schnittstelle.

### Aufgabe der vorliegenden Erfindung

Die Aufgabe der vorliegenden Erfindung besteht darin, ein neuartiges Verfahren zur Übertragung einer Information, insbesondere von Verbrauchs- und/oder Nutzdaten, zur Verfügung zu stellen, bei welchem die Übertragungswahrscheinlichkeit und die Energieeffizienz verbessert werden und die Störanfälligkeit verringert wird.

### Lösung der Aufgabe

Die vorstehende Aufgabe wird durch die gesamte Lehre des Anspruchs 1 gelöst. Zweckmäßige Ausgestaltungen der Erfindung sind in den Unteransprüchen beansprucht.

Die Idee der vorliegenden Erfindung besteht darin, dass jedes Datenpaket oder zumindest ein Teil der zu übertragenden Datenpakete mindestens einmal über einem ersten Kommunikationsprotokoll sowie über einem zweiten Kommunikationsprotokoll gesendet wird. Daraus resultiert der Vorteil, dass sich Störeinflüsse bei der Daten- bzw. Signalübertragung vermeiden lassen, indem zwei Kommunikationsprotokolle zur Übertragung verwendet werden. Beispielsweise kann als erstes Kommunikationsprotokoll ein herkömmliches Kommunikationsprotokoll, wie z. B. das des M-Bus ("Meter-Bus"; EN13757), und als zweites Kommunikationsprotokoll ein proprietäres Kommunikationsprotokoll verwendet werden. Das zweite Kommunikationsprotokoll kann somit Mittel, wie z. B. eine Synchronisationssequenz, umfassen, die die Übertragungssicherheit erhöhen bzw. die Störanfälligkeit der (Daten-)Übertragung verringern, die aber keinen Teil des herkömmlichen Kommunikationsprotokolls darstellen. Erfindungsgemäß wird aus einer mehrfachen Übertragung eines Datenpakets über das erste und das zweite Kommunikationsprotokoll empfängerseitig ein Datenpaket abgeleitet bzw. zusammengefasst, welches im Vergleich zu einem jeweils aus den Sendewiederholungen über nur ein einziges Kommunikationsprotokoll empfangenen Datenpaket einen reduzierten Störungsgrad aufweist. Zudem wird die Übertragungswahrscheinlichkeit des Datenpakets verbessert, indem mehrere Kommunikationsprotokolle zur Übertragung des Datenpakets verwendet werden und Teildatenpakete unabhängig vom jeweiligen Kommunikationsprotokoll zusammengefügt werden können. Die Anzahl der benötigten Datenübertragungen kann dadurch erheblich verringert werden, wodurch die Energieeffizienz des Senders verbessert wird.

Vorzugsweise umfasst das zweite Kommunikationsprotokoll einen sogenannten "Piloten" insbesondere in Form einer Synchronisationssequenz, wie z. B. ein Signal, eine Prä- und/oder Postambel, einen Beacon oder dergleichen, und/oder eine Zusatzinformation, wie z. B. einen Header, Kerndaten, Kopfdaten, Metadaten oder dergleichen, die insbesondere senderseitig generiert und den Datenpaketen und/oder Teildatenpaketen zugeordnet werden. Daraus resultiert der Vorteil, dass die Datenpakete z. B. durch eine Präambel angekündigt werden können, wobei eine Synchronisation der Sender und/oder Empfänger erfolgt und/oder durch eine Postambel, im Falle einer gestörten Präambel, dennoch eine erfolgreiche Synchronisation erfolgen kann. Darüber hinaus können z. B. mittels einer Prüfsumme oder einem Fehlererkennungscode dennoch fehlerhaft übertragene bzw. gestörte Datenpakete erkannt werden. Insbesondere kann dies anhand einer drei-aus-sechs-Fehlererkennung, einer zyklischen Redundanzprüfung (cyclic redundancy check - CRC), z. B. für jedes Datenpaket, oder eines Bitabgleichs der Sendewiederholungen des Datenpakets erfolgen. Die Wahrscheinlichkeit einer erfolgreichen Datenübertragung wird dadurch zusätzlich erhöht.

Zweckmäßigerweise kann die Synchronisationssequenz und/oder die Zusatzinformation den Datenpaketen und/oder Teildatenpaketen derart zugeordnet werden, sodass die Synchronisationssequenz und/oder die Zusatzinformation vor, zwischen und/oder nach dem jeweiligen Datenpaket und/oder Teildatenpaket gesendet wird.

Ferner können festlegbare Zeitintervalle zwischen den gesendeten Synchronisationssequenzen der Datenpakete vorgesehen sein, wobei die Feststellung des Störungszustandes eines Datenpakets und/oder eines Teildatenpakets aus den festgelegten Zeitintervallen abgeleitet wird. Es kann hierdurch festgestellt werden, ob ein Datenpaket bzw. ein Teildatenpaket (ungestört) übertragen wurde, da die Zeitabfolge der Synchronisationssequenzen und vorzugsweise auch die zeitliche Position der Datenpakete bzw. Teildatenpakete zu der Synchronisationssequenz bekannt ist. Zudem können insbesondere ungestört vorliegende Teildatenpakete eines insgesamt gestörten Datenpakets, ohne dass die diesen Teildatenpaketen bzw. dem entsprechenden Datenpaket zugeordnete Synchronisationssequenz empfangen wurde, verwendet werden, um empfängerseitig ein Datenpaket mit geringerem Störungsgrad abzuleiten. Dies kann dadurch erfolgen, dass die Position der ungestört empfangenen Teildatenpakete innerhalb des Datenpakets durch die Zeitintervalle zwischen den gesendeten Synchronisationssequenzen bestimmt wird. Hierdurch kann das jeweilige Teildatenpaket identifiziert werden. Dies wird beispielsweise dadurch ermöglicht, dass die Zeitintervalle zwischen der Synchronisationssequenz und dem jeweiligen Datenpaket bzw. dem Teildatenpaket bekannt sind.

Die Sender und Empfänger umfassen in der Regel eine Zeitreferenzeinrichtung, z. B. einen Quarzoszillator, zur zeitlichen Abstimmung der Informationsübertragung. Aufgrund von zeitlichen Abweichungen der Zeitreferenzeinrichtungen von Sender und Empfänger sind die Teildatenpakete, die zeitlich näher an einer eine Synchronisation bewirkenden Synchronisationssequenz angeordnet sind, weniger störanfällig, sodass es zu unterschiedlichen Übertragungswahrscheinlichkeiten der jeweiligen Teildatenpakete kommen kann. Dieser Unterschied kann dadurch vermieden oder zumindest verringert werden, dass die Sendereihenfolge der Teildatenpakete in den Sendewiederholungen des Datenpakets geändert wird. Dies kann beispielsweise anhand eines Algorithmus oder pseudozufällig erfolgen. Jedoch ist die Sendereihenfolge hierbei vorzugsweise sende- und empfangsseitig bekannt. Dies hat den Vorteil, dass die Teildatenpakete innerhalb der Sendewiederholungen des Datenpakets derart angeordnet werden können, dass die Teildatenpakete, z. B. von Sendewiederholung zu Sendewiederholung, jeweils unterschiedlich nah an der Synchronisationssequenz angeordnet sind. Dadurch wird die Wahrscheinlichkeit einer störungsfreien Übertragung der gesamten Teildatenpakete verbessert, indem die Übertragungswahrscheinlichkeiten der Teildatenpakete insgesamt erhöht werden.

Vorzugsweise erfolgt zur Zusammenfassung des Datenpakets eine Zeitsynchronisation des ersten und/oder zweiten Kommunikationsprotokolls. Die Zeitsynchronisation des ersten und/oder zweiten Kommunikationsprotokolls, kann dabei jeweils anhand einer Synchronisationssequenz erfolgen, die über das erste und/oder das zweite Kommunikationsprotokoll gesendet wurde. Daraus resultiert beispielsweise der Vorteil, dass die Zeitsynchronisation des ersten Kommunikationsprotokolls auch anhand einer über das zweite Kommunikationsprotokoll gesendeten Synchronisationssequenz erfolgen kann. Die Übertragungssicherheit kann dadurch in besonderem Maße verbessert werden.

Zweckmäßigerweise können das erste sowie das zweite Kommunikationsprotokoll über verschiedene Übertragungssysteme gesendet werden. Insbesondere kann z. B. die Codierung der Information bzw. der Datenpakete, z. B. Quellencodierung, Leitungscodierung, Kanalcodierung oder dergleichen, verändert werden. Diese Codierung muss anschließend empfängerseitig wieder decodiert und ggf. verstärkt und demoduliert werden. Dementsprechend sind die Empfänger Hard- und Softwaretechnisch derart vorkonfiguriert, sodass diese eine Übertragung über verschiedene Übertragungssysteme unterstützen.

Die Aufteilung der Datenpakete in Teildatenpakete kann empfänger- und/oder senderseitig erfolgen. Beispielsweise kann der Empfänger die empfangenen Datenpakete in Teildatenpakete aufteilen und den Störungszustand der Teildatenpakete z. B. über eine Prüfsumme oder einen Vergleich (z. B. Bit für Bit) mehrerer empfangener Datenpakete feststellen. Alternativ teilt der Sender die Datenpakete in Teildatenpakete auf, ordnet den Teildatenpaketen jeweils eine Fehlerkorrektur, z. B. in Form einer Postambel, zu und sendet diese mit den zugeordneten Datenpaketen bzw. Teildatenpaketen an den Empfänger. Hierbei kann der Empfänger die Fehlerkorrektur der Datenpakete bzw. Teildatenpakete nach erfolgtem Empfang durchführen.

Ferner können die Datenpakete und/oder Teildatenpakete derart codiert werden, dass der Empfänger die Datenpakete und/oder Teildatenpakete einzeln decodieren kann, d. h. nicht das gesamte Datenpaket empfangen muss, um dieses zu decodieren.

Alternativ oder zusätzlich können auch zwischen den Teildatenpaketen festlegbare Zeitintervalle vorgesehen sein, insbesondere wenn die Datenpakete senderseitig in Teildatenpakete unterteilt werden. Dadurch kann die zeitliche Position der Teildatenpakete anhand der Zeitintervalle zwischen den Synchronisationssequenzen und/oder anhand der Zeitintervalle zwischen den Teildatenpaketen bestimmt werden. Dadurch wird die Übertragungswahrscheinlichkeit eines Datenpakets noch zusätzlich verbessert.

Zweckmäßigerweise kann die Information bzw. das Datenpaket und/oder die Teildatenpakete zusätzlich über ein drittes Kommunikationsprotokoll und/oder über ein viertes Kommunikationsprotokoll übertragen werden. Dadurch können die Übertragungssicherheit und die Übertragungswahrscheinlichkeit noch zusätzlich verbessert werden.

Gemäß einer bevorzugten Ausgestaltung der vorliegenden Erfindung handelt es sich bei den Informationen um Verbrauchs- und/oder Nutzdaten, d. h. Messdaten und/oder Programmdaten, die von Verbrauchsmessgeräten, insbesondere von Wärmemengen-, Strom- und/oder Wasserzählern, bereitgestellt werden. Die Verbrauchsmessgeräte sind in der Regel batteriebetrieben und senden daher über batterieschonende Übertragungsmethoden, insbesondere mittels Funkübertragung bzw. kurzreichweiten-Funkübertragung, z. B. über ISM- oder SRD-Bänder vorzugsweise im Bereich von 850-950 MHz, besonders vorzugsweise im Bereich von 867-873 MHz. Durch das erfindungsgemäße Verfahren kann hierbei die Übertragungssicherheit verbessert, die Störanfälligkeit der Datenübertragung verringert und letztlich die Energieeffizienz, durch verringerte Sende- und Empfangsbereitschaftszeiten, in besonderem Maße gesteigert werden, sodass die vorliegende Erfindung auch einen herausragenden Beitrag zur Weiterentwicklung der Informationsübertragung derartiger Verbrauchsmessgeräte darstellt.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte schematische Darstellung eines Kommunikationssystems bestehend aus mehreren Sendern und einem Empfänger;
- Fig. 2: eine vereinfachte schematische Darstellung einer Ausgestaltung des erfindungsgemäßen Verfahrens;
- Fig. 3: eine vereinfachte schematische Darstellung einer aus mehreren Datenpaketen bestehenden Nachricht;
- Fig. 4: eine vereinfachte schematische Darstellung eines aus vier Teildatenpaketen bestehenden Datenpakets;
- Fig. 5: eine vereinfachte schematische Darstellung eines aus mehreren Teildatenpaketen bestehenden Datenpakets mit zugeordneter Präambel und Postambel;
- Fig. 6: eine vereinfachte schematische Darstellung von drei jeweils aus mehreren Teildatenpaketen bestehenden Datenpaketen mit jeweils zugeordneten Präambeln;
- Fig. 7: eine vereinfachte schematische Darstellung eines aus mehreren Teildatenpaketen bestehenden Datenpakets mit zugeordneter Präambel und festgelegten Zeitintervallen zwischen der Präambel und den Teildatenpaketen;
- Fig. 8: eine vereinfachte schematische Darstellung von drei jeweils aus mehreren Teildatenpaketen bestehenden Datenpaketen mit jeweils zugeordneten Präambeln und variierender Sendereihenfolge der Datenteilpakete, sowie
- Fig. 9: eine vereinfachte schematische Darstellung eines Datenpakets mit Header sowie zugeordneter Prä- und Postambel.

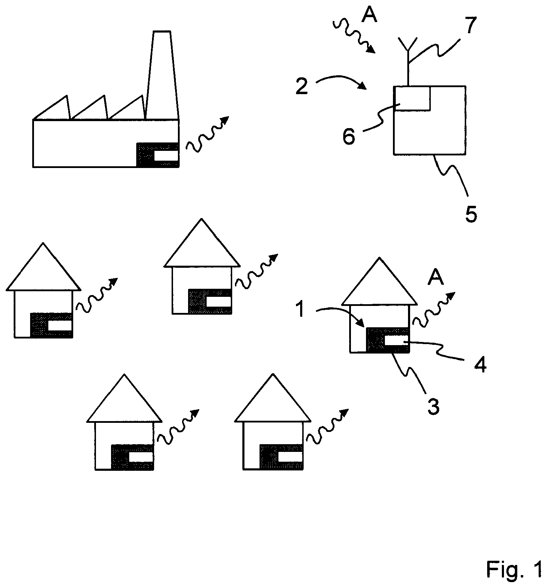

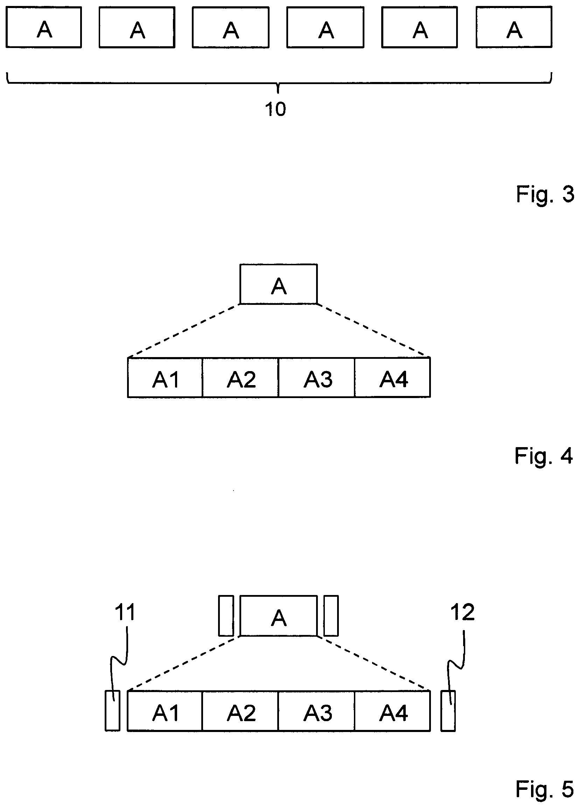

In Fig. 1 ist ein Kommunikationssystem dargestellt, bei dem mehrere Sender 1 Informationen an einen Empfänger 2 übermitteln. Bei den Sendern 1 handelt es sich um Verbrauchsmessgeräte 3, die Wohn- oder Industrieeinheiten zugeordnet sind. Die Verbrauchsmessgeräte 3 umfassen ein Kommunikationsmodul 4 bzw. eine Sende- und Empfangseinheit zum Senden und Empfangen der Informationen, wie z. B. der aktuelle Verbrauch an Wasser oder Strom. Diese Informationen sendet das Verbrauchsmessgerät 3 über das Kommunikationsmodul 4 an den Empfänger 2. Bei dem Empfänger 2 handelt es sich um einen Datensammler 5, der zum Senden und Empfangen von Informationen ein Kommunikationsmodul 6 sowie eine Antenne 7 umfasst. Bei dem Datensammler 5 kann es sich um einen Konzentrator, die Schaltzentrale eines Energieversorgers, ein mobiles Auslesegerät zur Walk-by- bzw. Drive-by-Ablesung oder dergleichen handeln. Die Informationen werden hierbei in Form von Datenpaketen A bzw. gemäß Fig. 3 anhand einer aus mehreren Datenpaketen A zusammengesetzten Nachricht 10 von den Sendern 1 an den Empfänger 2 übermittelt.

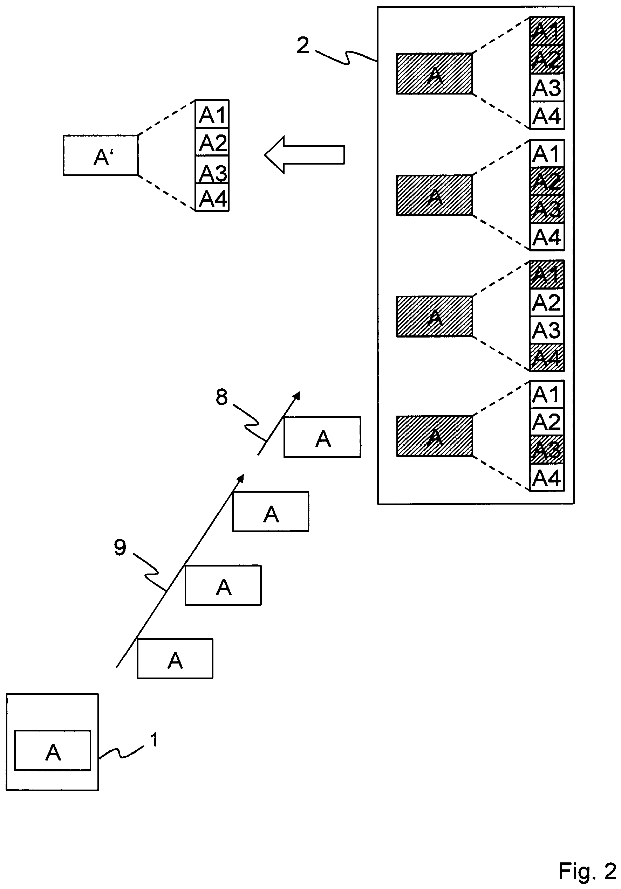

In Fig. 2 ist das erfindungsgemäße Verfahren zur Übertragung der Informationen in Form von Datenpaketen A schematisch näher dargestellt. Der Sender 1 generiert zunächst z. B. aus den Verbrauchsdaten ein Datenpaket A. Dieses Datenpaket A wird vom Sender 1 gemäß eines ersten Kommunikationsprotokolls 8 an den Empfänger 2 gesendet. In bevorzugter Weise kann das Senden des Datenpakets A über die ISM-Band-Frequenzbereiche und/oder die SRD-Band-Frequenzbereiche erfolgen, insbesondere im Frequenzbereich von 867 MHz bis 873 MHz. Der Empfänger 2 empfängt zunächst das Datenpaket A, welches über das erste Kommunikationsprotokoll 8 an den Empfänger 2 übermittelt worden ist. Der Empfänger 2 ist hierbei dazu hergerichtet, dass er das Datenpaket A gemäß Fig. 4 in Teildatenpakete A1, A2, A3, A4 aufteilt. Im Anschluss daran sendet der Sender 1 das Datenpaket A mehrfach, z. B. gemäß Fig. 2 drei Mal, an den Empfänger 2 über ein zweites Kommunikationsprotokoll 9. Diese über das zweite Kommunikationsprotokoll 9 gesendeten Datenpakete A werden ebenfalls vom Empfänger 2 empfangen und anschließend in Teildatenpakete A1, A2, A3, A4 aufgeteilt. Die in Fig. 2 dargestellte Schraffur der vom Empfänger 2 empfangenen Datenpakete A bzw. der Teildatenpakete A1, A2, A3, A4 markiert eine Störung der empfangenen Datenpakete A bzw. der Teildatenpakete A1, A2, A3, A4. Aufgrund dieser Störungen müssen die Datenpakete A in der Regel verworfen werden. Derartige Störungen bei der Übertragung der Datenpakete A können z. B. durch Störer, wie z. B. durch Datenübertragungen externer Geräte, die auf den gleichen Frequenzen senden, Interferenzen, Überlagerungen oder dergleichen, hervorgerufen werden.

Wie in Fig. 2 gezeigt, müssen jedoch nicht alle Teildatenpakete A1, A2, A3, A4 eines gestörten Datenpakets A gestört sein. Zunächst werden die Datenpakete A empfängerseitig in die jeweiligen Teildatenpakete A1, A2, A3, A4 aufgeteilt. Anschließend kann der Empfänger 2 den Störungszustand der Teildatenpakete A1, A2, A3, A4 feststellen. Dies kann beispielsweise dadurch erfolgen, dass der Empfänger 2 die Teildatenpakete A1, A2, A3, A4 aller empfangenen Datenpakete A miteinander vergleicht, insbesondere bitweise vergleicht. Anhand des ermittelten Störungszustandes der Teildatenpakete A1, A2, A3, A4 kann der Empfänger 2, die ungestörten Teildatenpakete A1, A2, A3, A4 der jeweiligen Datenpaketsendungen auswählen und diese zu einem ungestörten Datenpaket A' zusammenfassen. Dieses neu zusammengesetzte Datenpaket A' weist einen im Vergleich zu den vom Empfänger 2 empfangenen Datenpaketen A erheblich geringeren Störungsgrad auf.

Erfindungsgemäß ist der Empfänger 2 dazu hergerichtet, die Datenpakete A über mehrere Übertragungsprotokolle 8, 9 empfangen und dekodieren zu können. Gemäß einer besonderen Ausgestaltung des erfindungsgemäßen Verfahrens können auch ein drittes und/oder ein viertes und/oder noch weitere Übertragungsprotokolle zur Übertragung der Datenpakete A vorgesehen sein.

Zweckmäßigerweise umfasst das zweite Kommunikationsprotokoll 9 gemäß Fig. 5 eine Synchronisationssequenz, wie z. B. eine Präambel 11 und/oder eine Postambel 12. Derartige Synchronisationssequenzen dienen dazu, die Informationsübertragung bzw. die Sendung des Datenpakets A dem Empfänger 2 anzukündigen und ggf. eine Synchronisation von Sender 1 und Empfänger 2 zu bewirken. Die Synchronisationssequenz wird senderseitig generiert und den Teildatenpaketen bzw. den Datenpaketen zugeordnet. Die Synchronisationssequenzen können hierbei derart zugeordnet werden, dass sich diese vor, zwischen und/oder nach dem jeweiligen Datenpaket A bzw. den Teildatenpaketen A1, A2, A3, A4 befinden.

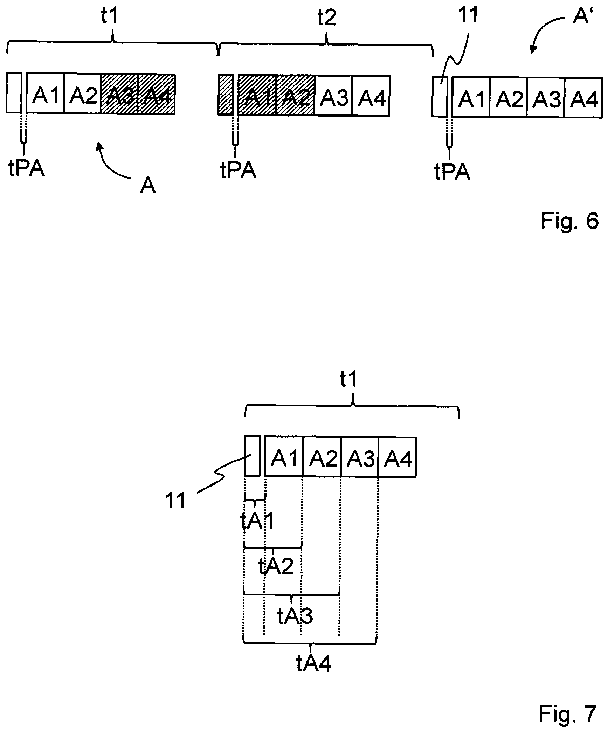

Gemäß einer bevorzugten Ausgestaltung der vorliegenden Erfindung nach Fig. 6, sind zwischen den gesendeten Synchronisationssequenzen, z. B. einer Präambel 11, Zeitintervalle t1, t2 festgelegt. Aus diesen definierten Zeitintervallen t1, t2 kann die Feststellung des Störungszustandes eines Datenpakets A bzw. eines Teildatenpakets A1, A2, A3, A4 abgeleitet werden. Beispielsweise kann dies dadurch erfolgen, dass die Zeitabstände tPA zwischen der Präambel 11 und dem Datenpaket A bzw. den Teildatenpaketen A1, A2, A3, A4 verwendet werden, um das gestörte Teildatenpaket A1, A2, A3 und/oder A4 zu ermitteln. Insbesondere können die Synchronisationssequenzen und/oder die Datenpakete A bzw. die Teildatenpakete A1, A2, A3, A4 in Fig. 6 auch über verschiedene Kommunikationsprotokolle 8, 9 übertragen worden sein.

Wie in Fig. 7 gezeigt, werden zusätzlich auch die Zeitabstände tA1, tA2, tA3, tA4 zwischen der Synchronisationssequenz bzw. der Präambel 11 und den Teildatenpaketen A1, A2, A3, A4 verwendet, um den Störungszustand des Datenpakets A und/oder der jeweiligen Teildatenpakete A1, A2, A3, A4 festzustellen.

Überraschenderweise hat sich hierbei gezeigt, dass auch gestörte oder gar nicht übermittelte Synchronisationssequenzen bzw. Präambeln 11 oder Postambeln 12 durch vorher und/oder darauffolgend gesendete Synchronisationssequenzen ausgeglichen werden können, indem beispielsweise gemäß Fig. 6 auch das Zeitintervall t1 + t2 zwischen der ersten und der dritten Präambel 11 bekannt ist und somit die Störung der zweiten Präambel 11 ausgeglichen werden kann. Aufgrund von Taktabweichungen der Zeitreferenzeinrichtungen der Sender 1 und Empfänger 2 kann es zu Zeitabweichungen, d. h. Verschiebungen der Zeitintervalle t1, t2 bzw. der Zeitabstände tA1, tA2, tA3, tA4, kommen, sodass die Störerdetektion bzw. das Zusammenfügen der Teildatenpakete A1, A2, A3, A4 erschwert wird. Durch eine Synchronisation der Zeitreferenzeinrichtung, z. B. über die Präambel 11 oder die Postambel 12, kann das Risiko einer Zeitabweichung von Sender 1 und Empfänger 2 verringert werden. Demzufolge ist die Wahrscheinlichkeit einer erfolgreichen, d. h. einer ungestörten, Übertragung eines Teildatenpakets A1, A2, A3, A4 des Datenpakets A wahrscheinlicher, je näher sich das Teildatenpaket A1, A2, A3, A4 an der Synchronisationssequenz befindet.

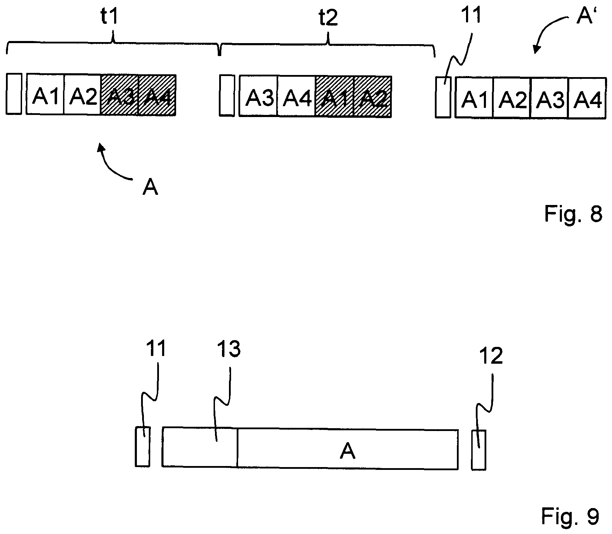

Zweckmäßigerweise kann die Sendereihenfolge der Teildatenpakete A1, A2, A3, A4 gemäß Fig. 8 in den Sendewiederholungen des Datenpakets A derart geändert werden, dass die Wahrscheinlichkeit einer erfolgreichen Übertragung jedes der Teildatenpakete A1, A2, A3, A4 im Wesentlichen gleich groß ist. Wie in Fig. 8 gezeigt, kann somit durch die Variation der Sendereihenfolge ein insgesamt ungestörtes Datenpaket A empfangen bzw. zusammengefügt werden, obwohl jeweils die von der Präambel 11 weiter entfernt befindlichen Teildatenpakete A3 und A4 bzw. A1 und A2 in den ersten beiden Sendewiederholungen gestört waren. Alternativ oder zusätzlich können auch Sendeprioritäten über die Position der Teildatenpakete festgelegt werden, indem Teildatenpakete A1, A2, A3, A4 mit hoher Sendepriorität vorzugsweise nah an der Synchronisationssequenz angeordnet werden.

Vorzugsweise kann die Aufteilung der Datenpakete A in Teildatenpakete A1, A2, A3, A4 empfänger- und/oder senderseitig erfolgen. Entweder teilt der Sender 1 die Datenpakete A bereits in Teildatenpakete A1, A2, A3, A4 auf und sendet diese vorzugsweise mit dazwischen befindlichen festlegbaren Zeitintervallen an den Empfänger 2 oder der Sender 1 sendet die Datenpakete A gemäß Fig. 2 an den Empfänger 2, wobei die Datenpakete A empfängerseitig nach dem Empfang in Teildatenpakete A1, A2, A3, A4 aufgeteilt werden. Die Datenpakete A bzw. die Teildatenpakete A1, A2, A3, A4 werden hierbei derart codiert, dass der Empfänger 2 die Datenpakete A bzw. die Teildatenpakete A1, A2, A3, A4 jeweils einzeln decodieren kann.

In Fig. 9 ist ein Datenpaket A mit einer Präambel 11 und einer Postambel 12 dargestellt, wobei das Datenpaket A zusätzlich eine vorangestellte Zusatzinformation in Form eines Headers 13 enthält. Der Header 13 kann Kerndaten, Metadaten oder dergleichen enthalten, die wiederum z. B. die ID-Nummern von Sender 1 und Empfänger 2, das Datenformat, Adressinformationen, die Zeichenkodierung oder dergleichen enthalten.

Ausdrücklich vom Offenbarungsgehalt umfasst sind auch Einzelmerkmalskombinationen (Unterkombinationen) sowie mögliche, nicht in den Zeichnungsfiguren dargestellte Kombinationen einzelner Merkmale unterschiedlicher Ausgestaltungsformen.

### BEZUGSZEICHENLISTE

- 1: Sender
- 2: Empfänger
- 3: Verbrauchsmessgerät
- 4: Kommunikationsmodul
- 5: Datensammler
- 6: Kommunikationsmodul
- 7: Antenne
- 8: erstes Kommunikationsprotokoll
- 9: zweites Kommunikationsprotokoll
- 10: Nachricht
- 11: Präambel
- 12: Postambel
- 13: Header

- A: Datenpaket
- A': zusammengefügtes Datenpaket A
- A1: Teildatenpaket
- A2: Teildatenpaket
- A3: Teildatenpaket
- A4: Teildatenpaket
- t1: Zeitintervall (zwischen erster und zweiter Präambel)
- t2: Zeitintervall (zwischen zweiter und dritter Präambel)
- tA1: Zeitabstand (zwischen Präambel Teildatenpaket A1)
- tA2: Zeitabstand (zwischen Präambel Teildatenpaket A2)
- tA3: Zeitabstand (zwischen Präambel Teildatenpaket A3)
- tA4: Zeitabstand (zwischen Präambel Teildatenpaket A4)
- tPA: Zeitabstand (zwischen Präambel Datenpaket)

## Patentansprüche

1. Verfahren zur Übertragung einer Information, insbesondere Verbrauchs- und/oder Nutzdaten, in Form eines Datenpakets (A), wobei
das Datenpaket (A) von einem Sender (1) über Funk wiederholt in vorzugsweise festlegbaren Zeitabständen an einen Empfänger (2) gesendet wird,
das Datenpaket (A) in Teildatenpakete (A1, A2, A3, A4) aufgeteilt wird,
der Störungszustand der Teildatenpakete (A1, A2, A3, A4) empfängerseitig festgestellt wird,
anhand des Störungszustandes bestimmte Teildatenpakete (A1, A2, A3, A4) ausgewählt werden, und
die ausgewählten Teildatenpakete (A1, A2, A3, A4) zu einem neuen, zu dem Datenpaket (A) komplementären Datenpaket (A') zusammengefasst werden,
**dadurch gekennzeichnet, dass**
das Datenpaket (A) sowohl über ein erstes Kommunikationsprotokoll (8) als auch über ein zweites Kommunikationsprotokoll (9) gesendet wird, und
aus den empfangenen Datenpaketen (A) das Datenpaket (A') abgeleitet wird, wobei
das Datenpaket (A') einen geringeren Störungsgrad aufweist als ein Datenpaket (A), welches ausschließlich über ein einziges Kommunikationsprotokoll empfangen wird.

2. Verfahren nach Anspruch 1, **dadurch gekennzeichnet, dass** das erste (8) und/oder zweite Kommunikationsprotokoll (9) eine Synchronisationssequenz und/oder eine Zusatzinformation umfasst, die senderseitig generiert und den Datenpaketen (A) und/oder Teildatenpaketen (A1, A2, A3, A4) zugeordnet wird.

3. Verfahren nach Anspruch 2, **dadurch gekennzeichnet, dass** die Synchronisationssequenz und/oder die Zusatzinformation den Datenpaketen (A) und/oder Teildatenpaketen (A1, A2, A3, A4) derart zugeordnet werden, dass die Synchronisationssequenz und/oder die Zusatzinformation vor, zwischen und/oder nach dem jeweiligen Datenpaket (A) und/oder Teildatenpaket (A1, A2, A3, A4) gesendet werden.

4. Verfahren nach Anspruch 2 oder 3, **dadurch gekennzeichnet, dass** Zeitintervalle (t1, t2) zwischen den gesendeten Synchronisationssequenzen der Datenpakete (A) festgelegt sind und die Feststellung des Störungszustandes eines Datenpakets (A) und/oder Teildatenpakets (A1, A2, A3, A4) aus den festgelegten Zeitintervallen (t1, t2) abgeleitet wird.

5. Verfahren nach mindestens einem der vorhergehenden Ansprüche, **dadurch gekennzeichnet, dass** die Sendereihenfolge der Teildatenpakete (A1, A2, A3, A4) in den Sendewiederholungen des Datenpakets (A) variiert wird.

6. Verfahren nach mindestens einem der vorhergehenden Ansprüche, **dadurch gekennzeichnet, dass** zur Zusammenfassung des Datenpakets (A') eine Zeitsynchronisation des ersten (8) und/oder zweiten Kommunikationsprotokolls (9) erfolgt.

7. Verfahren nach mindestens einem der vorhergehenden Ansprüche, **dadurch gekennzeichnet, dass** das erste (8) und das zweite Kommunikationsprotokoll (9) über verschiedene Übertragungssysteme gesendet wird.

8. Verfahren nach mindestens einem der vorhergehenden Ansprüche, **dadurch gekennzeichnet, dass** die Aufteilung der Datenpakete (A) in Teildatenpakete (A1, A2, A3, A4) empfänger- und/oder senderseitig erfolgt.

9. Verfahren nach mindestens einem der vorhergehenden Ansprüche, **dadurch gekennzeichnet, dass** die Datenpakete (A) und/oder Teildatenpakete (A1, A2, A3, A4) derart codiert sind, sodass der Empfänger (2) die Datenpakete (A) und/oder Teildatenpakete (A1, A2, A3, A4) einzeln decodieren kann.

10. Verfahren nach mindestens einem der vorhergehenden Ansprüche, **dadurch gekennzeichnet, dass** zwischen den Teildatenpaketen (A1, A2, A3, A4) festlegbare Zeitintervalle vorgesehen sind.

11. Verfahren nach mindestens einem der vorhergehenden Ansprüche, **dadurch gekennzeichnet, dass** das Datenpaket (A) zusätzlich über ein drittes Kommunikationsprotokoll und/oder über ein viertes Kommunikationsprotokoll gesendet wird.

12. Verfahren nach mindestens einem der vorhergehenden Ansprüche, **dadurch gekennzeichnet, dass** die Verbrauchs- und/oder Nutzdaten in Form von Messdaten von einem Verbrauchsmessgerät (3), insbesondere einem Wärmemengen-, Strom- oder Wasserzähler, bereitgestellt werden.

## Claims

1. A method for transmitting information, in particular consumption data and/or useful data, in the form of a data packet (A), wherein
the data packet (A) is transmitted repeatedly, preferably at definable time intervals, via radio from a transmitter (1) to a receiver (2),
the data packet (A) is divided into data subpackets (A1, A2, A3, A4),
the interference state of the data subpackets (A1, A2, A3, A4) is established on the receiver side,
specific data subpackets (A1, A2, A3, A4) are selected on the basis of the interference state, and
the selected data subpackets (A1, A2, A3, A4) are combined into a new data packet (A') complementary to the data packet (A),
**characterized in that**
the data packet (A) is transmitted via both a first communication protocol (8) and a second communication protocol (9), and
the data packet (A') is derived from the received data packets (A), wherein
the data packet (A') has a lower level of interference than a data packet (A) which is received exclusively via a single communication protocol.

2. The method as claimed in claim 1, **characterized in that** the first (8) and/or second communication protocol (9) comprises a synchronization sequence and/or additional information which is generated on the transmitter side and is assigned to the data packets (A) and/or data subpackets (A1, A2, A3, A4).

3. The method as claimed in claim 2, **characterized in that** the synchronization sequence and/or the additional information is/are assigned to the data packets (A) and/or data subpackets (A1, A2, A3, A4) in such a way that the synchronization sequence and/or the additional information is/are transmitted before, between and/or after the respective data packet (A) and/or data subpackets (A1, A2, A3, A4).

4. The method as claimed in claim 2 or 3, **characterized in that** time intervals (t1, t2) are defined between the transmitted synchronization sequences of the data packets (A) and the establishment of the interference state of a data packet (A) and/or data subpacket (A1, A2, A3, A4) is derived from the defined time intervals (t1, t2).

5. The method as claimed in at least one of the preceding claims, **characterized in that** the transmission sequence of the data subpackets (A1, A2, A3, A4) is varied in the transmission repetitions of the data packet (A).

6. The method as claimed in at least one of the preceding claims, **characterized in that** a time synchronization of the first (8) and/or second communication protocol (9) is performed in order to compile the data packet (A').

7. The method as claimed in at least one of the preceding claims, **characterized in that** the first (8) and the second communication protocol (9) are transmitted via different transmission systems.

8. The method as claimed in at least one of the preceding claims, **characterized in that** the data packets (A) are divided into data subpackets (A1, A2, A3, A4) on the receiver side and/or on the transmitter side.

9. The method as claimed in at least one of the preceding claims, **characterized in that** the data packets (A) and/or data subpackets (A1, A2, A3, A4) are coded in such a way that the receiver (2) can decode the data packets (A) and/or data subpackets (A1, A2, A3, A4) individually.

10. The method as claimed in at least one of the preceding claims, **characterized in that** definable time intervals are provided between the data subpackets (A1, A2, A3, A4).

11. The method as claimed in at least one of the preceding claims, **characterized in that** the data packet (A) is additionally transmitted via a third communication protocol and/or via a fourth communication protocol.

12. The method as claimed in at least one of the preceding claims, **characterized in that** the consumption data and/or useful data are provided in the form of metering data by a consumption-metering device (3), in particular a heat, electricity or water meter.

## Revendications

1. Procédé de transmission d'informations, en particulier de données de consommation et/ou d'utilisation, sous la forme d'un paquet de données (A), dans lequel
le paquet de données (A) est émis par un émetteur (1), par radio, de manière répétée à des intervalles de temps de préférence définissables, vers un récepteur (2),
le paquet de données (A) est divisé en paquets de données partiels (A1, A2, A3, A4),
l'état de perturbation des paquets de données partiels (A1, A2, A3, A4) est déterminé côté récepteur, et
des paquets de données partiels (A1, A2, A3, A4) spécifiques sont sélectionnés en fonction de l'état de perturbation, et
les paquets de données partiels (A1, A2, A3, A4) sélectionnés sont assemblés en un nouveau paquet de données (A') complémentaire du paquet de données (A), **caractérisé en ce que**
le paquet de données (A) est non seulement émis par l'intermédiaire d'un premier protocole de communication (8), mais également par l'intermédiaire d'un deuxième protocole de communication (9), et
le paquet de données (A') est dérivé des paquets de données (A) reçus, dans lequel
le paquet de données (A') présente un degré de perturbation inférieur à celui d'un paquet de données (A), qui est reçu exclusivement par l'intermédiaire d'un seul protocole de communication.

2. Procédé selon la revendication 1, **caractérisé en ce que** le premier (8) et/ou le deuxième protocole de communication (9) comprend une séquence de synchronisation et/ou une information supplémentaire, qui est générée côté émetteur et qui est associée aux paquets de données (A) et/ou aux paquets de données partiels (A1, A2, A3, A4).

3. Procédé selon la revendication 2, **caractérisé en ce que** la séquence de synchronisation et/ou l'information supplémentaire sont associées aux paquets de données (A) et/ou aux paquets de données partiels (A1, A2, A3, A4) de telle sorte que la séquence de synchronisation et/ou l'information supplémentaire soient émises avant, entre et/ou après le paquet de données (A) et/ou le paquet de données partiel (A1, A2, A3, A4) respectif.

4. Procédé selon la revendication 2 ou 3, **caractérisé en ce que** des intervalles de temps (t1, t2) sont définis entre les séquences de synchronisation émises des paquets de données (A) et **en ce que** la définition de l'état de perturbation d'un paquet de données (A) et/ou d'un paquet de données partiel (A1, A2, A3, A4) est dérivée des intervalles de temps (t1, t2) définis.

5. Procédé selon au moins l'une des revendications précédentes, **caractérisé en ce que** l'ordre d'émission des paquets de données partiels (A1, A2, A3, A4) est amené à varier au cours des répétitions d'émission du paquet de données (A).

6. Procédé selon au moins l'une des revendications précédentes, **caractérisé en ce qu'**une synchronisation temporelle du premier (8) et/ou du deuxième protocole de communication (9) est effectuée pour l'assemblage du paquet de données (A').

7. Procédé selon au moins l'une des revendications précédentes, **caractérisé en ce que** le premier (8) et le deuxième protocole de communication (9) sont émis par l'intermédiaire de différents systèmes de transmission.

8. Procédé selon au moins l'une des revendications précédentes, **caractérisé en ce que** la division des paquets de données (A) en paquets de données partiels (A1, A2, A3, A4) est effectuée côté récepteur et/ou côté émetteur.

9. Procédé selon au moins l'une des revendications précédentes, **caractérisé en ce que** les paquets de données (A) et/ou les paquets de données partiels (A1, A2, A3, A4) sont codés de telle sorte que le récepteur (2) puisse décoder individuellement les paquets de données (A) et/ou les paquets de données partiels (A1, A2, A3, A4).

10. Procédé selon au moins l'une des revendications précédentes, **caractérisé en ce que** des intervalles de temps définissables sont prévus entre les paquets de données partiels (A1, A2, A3, A4).

11. Procédé selon au moins l'une des revendications précédentes, **caractérisé en ce que** le paquet de données (A) est en outre émis par l'intermédiaire d'un troisième protocole de communication et/ou d'un quatrième protocole de communication.

12. Procédé selon au moins l'une des revendications précédentes, **caractérisé en ce que** les données de consommation et/ou d'utilisation sont fournies sous la forme de données de mesure d'un appareil de mesure de consommation (3), en particulier d'un compteur de chaleur, d'un compteur d'électricité ou d'un compteur d'eau.
